# EUROPÄISCHE PATENTANMELDUNG

(11) **EP 1 942 443 A1**
(43) Veröffentlichungstag der Anmeldung: **09.07.2008**
(21) Anmeldenummer: 07000188.8
(22) Anmeldetag: 05.01.2007
(51) Int. Cl.: G06K 9/00

(54) **Verfahren und Vorrichtung zum Identifizieren von Bauteilen**

(71) Anmelder: SIEMENS AKTIENGESELLSCHAFT, 80333 München (DE)
(72) Erfinder: Jungbluth, Matthias, 12681 Berlin (DE); Wilkenhöner, Rolf, Dr., 14523 Kleinmachnow (DE)

(57) **Zusammenfassung**

Verfahren zum Identifizieren von Bauteilen (2), bei dem individuelle Merkmale eines Bauteils (2), welche zufällig bei seiner Herstellung und/oder Bearbeitung ausgebildet wurden, in definierten Bereichen ermittelt und als ein Satz von Merkmalen für dieses Bauteil (2) gespeichert werden, und bei dem zur Identifikation das Bauteil (2) in den definierten Bereichen auf das Vorhandensein der individuellen Merkmale untersucht wird und der dabei ermittelte Satz von Merkmalen des Bauteils (2) jeweils mit den gespeicherten Sätzen von Merkmalen verglichen wird, um bei Identität oder hoher Ähnlichkeit das Bauteil (2) zu identifizieren.

## Beschreibung

Die Erfindung betrifft ein Verfahren und eine Vorrichtung zum Identifizieren von Bauteilen.

Bauteile, insbesondere werthaltige Bauteile, werden von den Herstellern auf verschiedene Weise gekennzeichnet, um deren spätere Identifizierung zu ermöglichen. Durch diese Kennzeichnung ist es einerseits möglich, eigene von fremden Bauteilen zu unterscheiden, und andererseits kann eine genaue Zuordnung des Bauteils erfolgen.

Im Stand der Technik ist es bekannt, verschiedene Arten von Kennzeichnungen zu verwenden. Dabei werden im einfachsten Fall alphanumerische Informationen auf dem Bauteil aufgebracht. Ebenfalls ist es möglich, die Kennzeichnungsinformationen kodiert in Form von Barcodes auszubilden.

In der DE 3827541 C2 ist ein Verfahren zum Kennzeichnen von Bauteilen, insbesondere von Gasturbinenschaufeln, durch Ausbilden und Auslesen von einer oder mehreren Codereihen in Form von Vertiefungen beschrieben. Die Vertiefungen weisen eine Tiefe > 10µm auf und werden zum Auslesen mit einem Laserabtaster abgefahren, der die Tiefendifferenz zwischen der Bauteiloberfläche und den Vertiefungen ermittelt.

Nachteil des bekannten Verfahrens ist es, dass die Kennzeichnungsinformationen in offensichtlich erkennbarer Form auf dem Bauteil aufgebracht sind. Es ist daher für Fremdhersteller auf relativ einfache Weise möglich, das Bauteil und die zugehörige Markierung zu kopieren. Außerdem sind die Kennzeichnungsinformationen lediglich in einem kleinen definierten Bereich des Bauteils angeordnet und können so bei der Verwendung des Bauteils durch lokale Beschädigungen in diesem Bereich vollständig zerstört werden. In diesem Fall ist dann keine Identifikation des Bauteils mehr möglich.

Es ist daher Aufgabe der vorliegenden Erfindung ein Verfahren zum Identifizieren von Bauteilen so anzugeben, bei dem die zur Identifizierung verwendeten Informationen für Fremde nicht ohne weiteres erkennbar sind. Außerdem sollen die Kennzeichnungsinformationen so beschaffen sein, dass sie in ihrer Gesamtheit auch bei einer teilweisen Beschädigung noch mit hinreichender Sicherheit ausgelesen werden können.

Diese Aufgabe wird dadurch gelöst, dass individuelle Merkmale eines Bauteils, welche zufällig bei seiner Herstellung und/oder Bearbeitung ausgebildet wurden, in definierten Bereichen ermittelt und als ein Satz von Merkmalen für dieses Bauteil gespeichert werden, und bei dem zur Identifikation das Bauteil in den definierten Bereichen auf das Vorhandensein der individuellen Merkmale untersucht wird und der dabei ermittelte Satz von Merkmalen des Bauteils jeweils mit den gespeicherten Sätzen von Merkmalen verglichen wird, um bei Identität oder hoher Ähnlichkeit das Bauteil zu identifizieren.

Grundgedanke der Erfindung ist es also, eine für eine sichere Identifizierung ausreichend große Anzahl von individuellen Merkmalen des Bauteils in definierten Bereichen zu ermitteln und sie als einen zusammenhängenden Satz von Merkmalen für dieses spezielle Bauteil zu speichern. Dabei werden erfindungsgemäß solche individuelle Merkmale ermittelt, die bei der Herstellung und/oder Bearbeitung des Bauteils zufällig mit ausgebildet werden. So werden also keinen zusätzlichen, leicht erkennbaren neuen Merkmale auf dem Bauteil aufgebracht, sondern es werden vorhandene, nicht als solche erkennbare Herstellungs- und/oder Bearbeitungsmerkmale zur Identifikation herangezogen. Die individuellen Merkmale werden dabei in vorher festgelegten Bereichen des Bauteils, die an verschiedenen Stellen des Bauteils zu liegen kommen, ermittelt.

Zur Identifikation wird dann das Bauteil in den definierten Bereichen auf das Vorhandensein der individuellen Merkmale untersucht und der dabei ermittelte Satz von Merkmalen des Bauteils wird mit den gespeicherten Sätzen von Merkmalen verglichen. Wenn dieser Vergleich eine Identität des ermittelten Satzes von Merkmalen mit den Sätzen von gespeicherten Merkmalen ergibt, ist das Bauteil eindeutig identifiziert.

Auch bei einer hinreichend hohen Ähnlichkeit der Sätze von Merkmalen kann eine positive Identifizierung des Bauteils erfolgen, was insbesondere dann wichtig ist, wenn Teile der Merkmale während der Verwendung des Bauteils beschädigt oder zerstört worden sind. Um hier eine ausreichend hohe Sicherheit bei der Identifizierung des Bauteils zu gewährleisten, ist es notwendig eine genügend große Zahl von individuellen Merkmalen für einen Satz von Merkmalen zu ermitteln. In diesem Fall besteht selbst dann, wenn einzelne individuelle Merkmale beschädigt oder zerstört werden, keine Gefahr einer Verwechslung verschiedener Bauteile.

Besonders vorteilhaft ist, dass zur Identifikation des Bauteils keine offensichtlichen Merkmale auf dem Bauteil aufgebracht werden müssen. So entfällt einerseits der zusätzliche Arbeitsschritt des Ausbildens dieser Informationen, und andererseits ist es für Fremdhersteller schwierig, die vorhandenen Kennzeichnungsinformationen überhaupt aufzufinden. Außerdem wird es Fremdherstellern nahezu unmöglich gemacht, die Bauteile in ihrer individuellen Form, die jeweils als ein Satz von Merkmalen gespeichert ist, zu kopieren. Zuletzt ist selbst dann eine Identifikation des Bauteils möglich, wenn einzelne individuelle Merkmale während des Betriebs beschädigt oder zerstört wurden.

Gemäß einer ersten Ausführungsform der Erfindung ist vorgesehen, dass als individuelle Merkmale Riefen an spanend bearbeiteten Flächen ermittelt werden. Dabei kann es sich beispielsweise um Schleifspuren handeln. Diese werden jeweils in einer charakteristischen, individuellen Weise zufällig beim Schleifen ausgebildet. Entsprechende Schleifriefen exakt zu kopieren ist nahezu unmöglich oder mit einem so hohen Aufwand verbunden, dass dies für Fremdhersteller, die das Bauteil kopieren wollen, unwirtschaftlich wird. Da außerdem entsprechende Riefen zu dem normalen Erscheinungsbild eines Bauteils gehören, werden nicht informierte Personen kaum auf die Idee kommen, dass es sich hierbei auch um Kennzeichnungsinformationen handelt.

Es ist ebenfalls möglich als individuelle Merkmale die Maße des Bauteils und/oder die Maße einzelner Bereiche des Bauteils zu ermitteln. Da bei der Herstellung und/oder Bearbeitung des Bauteils im Toleranzbereich maßliche Abweichungen von einer vorgegebenen Idealform auftreten, können die exakten Maße des Bauteils als dessen individuelle Merkmale ermittelt werden. So können beispielsweise Längen, Breiten, Winkel oder Krümmungen bestimmt werden. Vorteilhaft ist hier ebenfalls, dass die Kennzeichnungsinformationen nicht separat auf dem Bauteil aufgebracht werden müssen und außerdem als solche nicht ohne weiteres erkennbar sind.

Weiterhin können als individuelle Merkmale auch die Materialdichte und/oder die elektrische Leitfähigkeit und/oder das Reflexionsvermögen für elektromagnetische Strahlung und/oder die Absorbtionsfähigkeit für elektromagnetische Strahlung ermittelt werden. Diese Eigenschaften können mit geeigneten Messeinrichtungen einzeln oder gemeinsam in definierten Bereichen des Bauteils gemessen werden. Die dabei ermittelten Merkmale sind wiederum individuell für das Bauteil und erlauben so dessen sichere Identifizierung.

Gemäß einer weiteren Ausführungsform der Erfindung ist vorgesehen, dass als Bauteil ein Teil einer Turbine, insbesondere eine Turbinenschaufel identifiziert wird. Turbinenschaufeln moderner Gasturbinen sind besonders werthaltige Bauteile, so dass hier ein großer Bedarf für einen Schutz vor Nachbauten besteht. Außerdem ist eine präzise Identifizierung der einzelnen Turbinenschaufeln beispielsweise im Rahmen der Wartung vorteilhaft, da so die Bauteilgeschichte dokumentiert werden kann.

Die erfindungsgemäße Aufgabe wird ebenfalls durch eine Vorrichtung mit den Merkmalen des Anspruchs 6 gelöst.

Gemäß einer bevorzugten Ausführungsform ist vorgesehen, dass die Erkennungseinheit kryptographisch gesichert ist. Auf diese Weise wird sichergestellt, dass selbst dann, wenn diese Erkennungseinheit in die Hände eines Fremdherstellers gelangen sollte, deren missbräuchliche Verwendung ausgeschlossen ist.

Außerdem kann vorgesehen sein, dass die Erkennungseinheit eine Strahlungsquelle zur Abgabe von elektromagnetischer Strahlung in Richtung des Bauteils und einen Strahlungsdetektor zur Detektion der Reflexion und/oder der Laufzeit der von dem Bauteil reflektierten elektromagnetischen Strahlung aufweist, wobei der Strahlungsdetektor dafür ausgelegt ist, aus der Reflexion und/oder der Laufzeit die individuellen Merkmale des Bauteils zu ermitteln. Mit Hilfe dieser Vorrichtung können beispielsweise schnell und zuverlässig Riefen an spanend bearbeiteten Flächen als individuelle Merkmale des Bauteils ermittelt werden.

Im Folgenden wird die Erfindung anhand eines Ausführungsbeispiels mit Bezug auf die Zeichnung näher erläutert. In der Zeichnung zeigen:

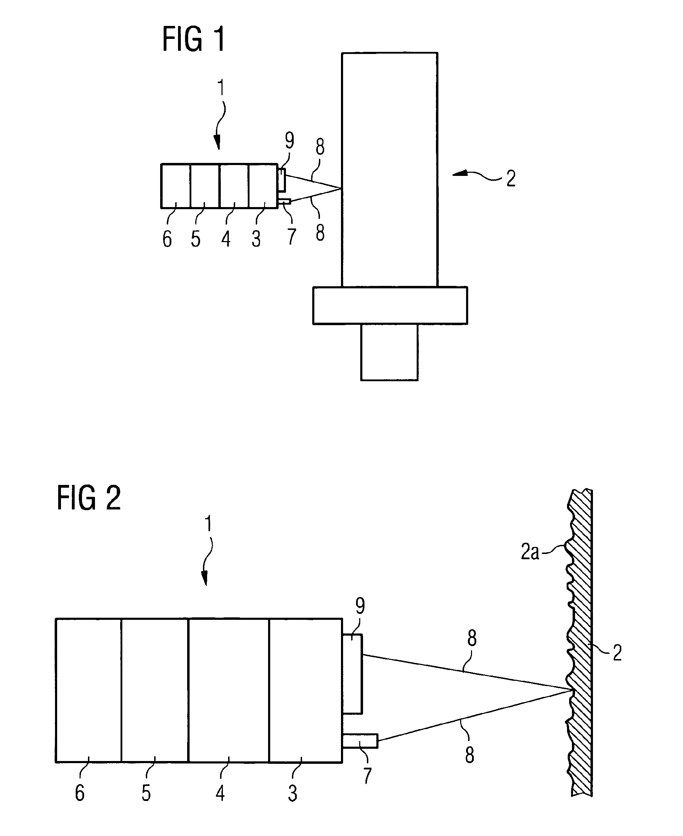

- Figur 1: eine schematische Darstellung einer erfindungsgemäßen Vorrichtung zum Identifizieren von Bauteilen und
- Figur 2: einen vergrößerten Ausschnitt der Figur 1.

In der Figur ist eine erfindungsgemäße Vorrichtung 1 zum Identifizieren eines Bauteils, hier einer Turbinenschaufel 2, dargestellt. Die Vorrichtung 1 weist eine Erkennungseinheit 3 zum Ermitteln von individuellen Merkmalen der Turbinenschaufel 2 auf. Außerdem hat sie einen Speicher 4, um die ermittelten individuellen Merkmale jeweils als ein Satz von Merkmalen der Turbinenschaufel 2 zu speichern. Sie weist auch einen Prozessor 5 auf, um den von der Erkennungseinheit 3 ermittelten Satz von Merkmalen der Turbinenschaufel 2 jeweils mit den gespeicherten Sätzen von Merkmalen aus dem Speicher 4 zu vergleichen. Schließlich hat sie eine von dem Prozessor 5 gesteuerte Anzeige 6, um das Ergebnis des Merkmalvergleichs des Prozessors 5 anzuzeigen.

Die Erkennungseinheit 3 umfasst eine Strahlungsquelle 7 zur Abgabe von elektromagnetischer Strahlung 8 in Richtung der Turbinenschaufel 2 und einen Strahlungsdetektor 9 zur Detektion der Reflexion und/oder der Laufzeit der von der Turbinenschaufel 2 reflektierten elektromagnetischen Strahlung 8. Der Strahlungsdetektor 9 ist dafür ausgelegt, aus der Reflexion und/oder der Laufzeit der elektromagnetischen Strahlung 8 die individuellen Merkmale der Turbinenschaufeln, hier Riefen 2a auf der Oberfläche der Turbinenschaufel 2, zu ermitteln. Die Riefen 2a sind bei der Herstellung und/oder bei der Bearbeitung der Turbinenschaufel 2 zufällig mit ausgebildet worden.

Um mit der Vorrichtung 1 die Turbinenschaufel 2 zu identifizieren, werden zu deren Erfassung als individuelle Merkmale die Riefen 2a in definierten Bereichen der Turbinenschaufel 2 ermittelt. Dabei können die definierten Bereiche an verschiedensten Teilen der Turbinenschaufel 2 anliegen. Die Strahlungsquelle 7 gibt die elektromagnetische Strahlung 8, beispielsweise sichtbares Licht, in Richtung der Turbinenschaufel 2 ab, die dann an der Oberfläche der Turbinenschaufel 2, genauer gesagt an den individuell ausgebildeten Riefen 2a reflektiert und schließlich von dem Strahlungsdetektor 9 detektiert wird. Anhand der Reflexion und/oder der Laufzeit der elektromagnetischen Strahlung 8 ermittelt der Strahlungsdetektor 9 Form und Anordnung der Riefen 2a als individuelle Merkmale der Turbinenschaufel 2, welche dann als ein Satz von Merkmalen der Turbinenschaufel 2 in dem Speicher 5 der Vorrichtung 1 gespeichert werden.

Zur Erkennung wird die Turbinenschaufel 2 in den definierten Bereichen auf das Vorhandensein von Riefen 2a unter Verwendung der Vorrichtung 1 untersucht. Falls Riefen 2a aufgefunden werden, werden deren Form und Anordnung in der oben beschriebenen Weise ermittelt und anschließend als ein Satz von Merkmalen an den Prozessor 5 weitergeleitet, der diesen mit den gespeicherten Sätzen von Merkmalen aus dem Speicher 4 vergleicht. Stellt der Prozessor 5 bei diesem Merkmalsvergleich eine Identität der Sätze von Merkmalen bzw. eine ausreichend hohe Ähnlichkeit fest, so gibt er das positive Identifizierungsergebnis auf der Anzeige 6 aus. Besteht keine Identität zwischen den Sätzen von Merkmalen oder liegt die Abweichung außerhalb einer vorgegebenen Norm, so zeigt der Prozessor 5 auf der Anzeige 6 an, dass es sich nicht um eine bekannte Turbinenschaufel 2 handelt.

Alternativ können Kombinationen verschiedener Arten von individuellen Merkmalen der Turbinenschaufel 2 ermittelt werden. So können beispielsweise die Maße bestimmter Bereiche der Turbinenschaufel, die Materialdichte in demselben oder einem anderen Bereich und die Form und Anordnung von Riefen in einem dritten Bereich ermittelt werden. Grundsätzlich ist die Kombination verschiedenster Merkmale zur Bildung des Satzes der Merkmale für die Turbinenschaufel möglich.

Die Vorteile des erfindungsgemäßen Verfahrens und der erfindungsgemäßen Vorrichtung 1 sind, dass die Turbinenschaufel 2 identifiziert werden kann, ohne dass auf ihr in einem gesonderten Schritt offensichtliche Erkennungsmerkmale, die leicht zu kopieren sind, angebracht werden müssen.

## Patentansprüche

1. Verfahren zum Identifizieren von Bauteilen (2),
bei dem individuelle Merkmale eines Bauteils (2),
welche zufällig bei seiner Herstellung und/oder Bearbeitung ausgebildet wurden,
in definierten Bereichen ermittelt und als ein Satz von Merkmalen für dieses Bauteil (2) gespeichert werden,
und bei dem zur Identifikation das Bauteil (2) in den definierten Bereichen auf das Vorhandensein der individuellen Merkmale untersucht wird und der dabei ermittelte Satz von Merkmalen des Bauteils (2) jeweils mit den gespeicherten Sätzen von Merkmalen verglichen wird, um bei Identität oder hoher Ähnlichkeit das Bauteil (2) zu identifizieren.

2. Verfahren nach Anspruch 1,
**dadurch gekennzeichnet, dass**
als individuelle Merkmale Riefen (2a) an spanend bearbeiteten Flächen ermittelt werden.

3. Verfahren nach einem der vorhergehenden Ansprüche,
**dadurch gekennzeichnet, dass**
als individuelle Merkmale die Maße des Bauteils (2) und/oder die Maße einzelner Bereiche des Bauteils (2) ermittelt werden.

4. Verfahren nach einem der vorhergehenden Ansprüche,
**dadurch gekennzeichnet, dass**
als individuelle Merkmale die Materialdichte und/oder die elektrische Leitfähigkeit und/oder das Reflektionsvermögen für elektromagnetische Strahlung und/oder die Absorptionsfähigkeit für elektromagnetische Strahlung ermittelt werden.

5. Verfahren nach einem der vorhergehenden Ansprüche,
**dadurch gekennzeichnet, dass**
als Bauteil (2) ein Teil einer Turbine, insbesondere eine Turbinenschaufel identifiziert wird.

6. Vorrichtung (1) zum Identifizieren von Bauteilen (2) mit einer Erkennungseinheit (3) zum Ermitteln von individuellen Merkmalen eines Bauteils (2),
welche zufällig bei seiner Herstellung und/oder Bearbeitung in definierten Bereichen ausgebildet wurden,
einem Speicher (4), um die ermittelten individuellen Merkmale als einen Satz von Merkmalen für dieses Bauteil (2) zu speichern,
einem Prozessor (5), um den von der Erkennungseinheit (3) ermittelten Satz von Merkmalen des Bauteils (2) jeweils mit den gespeicherten Sätzen von Merkmalen aus dem Speicher (4) zu vergleichen,
und einer von dem Prozessor (5) gesteuerten Anzeige (6), um das Ergebnis des Merkmalvergleichs des Prozessors (5) anzuzeigen.

7. Vorrichtung (1) nach Anspruch 6,
**dadurch gekennzeichnet, dass**
die Erkennungseinheit (3) kryptographisch gesichert ist.

8. Vorrichtung (1) nach einem der Ansprüche 6 oder 7,
**dadurch gekennzeichnet, dass**
die Erkennungseinheit (3) eine Strahlungsquelle (7) zur Abgabe von elektromagnetischer Strahlung (8) in Richtung des Bauteils (2) und einen Strahlungsdetektor (9) zur Detektion der Reflexion und/oder der Laufzeit der von dem Bauteil (2) reflektierten elektromagnetischen Strahlung (8) aufweist,
wobei der Strahlungsdetektor (9) dafür ausgelegt ist, aus der Reflexion und/oder der Laufzeit die individuellen Merkmale des Bauteils (2) zu ermitteln.
